# EUROPÄISCHE PATENTSCHRIFT

(11) **EP 3 337 639 B1**
(45) Veröffentlichungstag und Bekanntmachung des Hinweises auf die Patenterteilung: **19.02.2020**
(21) Anmeldenummer: 17751380.1
(22) Anmeldetag: 08.08.2017
(51) Int. Cl.: B23P 19/04, B60J 10/00

(54) **VERFAHREN ZUM ANBRINGEN VON DICHTUNGSPROFILEN MIT EINER KLEBESCHICHT AN FAHRZEUGKAROSSERIEN ODER DEREN TEILEN UND APPLIKATIONSEINRICHTUNG ZUR DURCHFÜHRUNG DES VERFAHRENS**
METHOD FOR FITTING SEALING PROFILES, BY WAY OF AN ADHESIVE LAYER, ON VEHICLE BODIES OR THE PARTS THEREOF AND APPLYING DEVICE FOR CARRYING OUT THE METHOD
PROCÉDÉ DE MONTAGE DE PROFILÉS D'ÉTANCHÉITÉ AU MOYEN D'UNE COUCHE ADHÉSIVE SUR DES CARROSSERIES DE VÉHICULE OU DES PARTIES DE CELLES-CI ET DISPOSITIF D'APPLICATION POUR LA MISE EN OEUVRE DU PROCÉDÉ

(30) Priorität: 30.08.2016 DE 102016116107
(43) Veröffentlichungstag der Anmeldung: 27.06.2018
(73) Patentinhaber: Tesla Grohmann Automation GmbH, 54595 Prüm (DE)
(72) Erfinder: GROHMANN, Klaus, 54597 Hersdorf (DE); THOMMES, Lothar, 54634 Bitburg (DE)
(74) Vertreter: Kohlmann, Kai
(86) Internationale Anmeldenummer: PCT/EP2017/070106
(87) Internationale Veröffentlichungsnummer: WO 2018/041559

(56) Entgegenhaltungen:
- EP-A1- 1 502 790
- EP-A1- 1 733 839
- WO-A1-2015/039725
- WO-A1-2015/096880
- DE-A1-102006 032 138
- DE-C1- 19 704 327

## Beschreibung

Die Erfindung betrifft ein Verfahren zum Anbringen von Dichtungsprofilen an Fahrzeugkarosserien oder deren Teilen, wobei das Dichtungsprofil aus einer Abspuleinheit abgezogen und mit einer an dem Dichtungsprofil angeordneten Klebeschicht entlang einer für die Anbringung vorgesehenen Applikationslinie an der Fahrzeugkarosserie oder dem Teil der Fahrzeugkarosserie mittels einer Andruckrolle eines Applikationskopfes aufgerollt wird.

Die Erfindung betrifft auch eine Applikationseinrichtung zur Durchführung des Verfahrens.

Aus der DE 101 38 781 A1 ist ein Verfahren zur Anbringung einer Dichtung an einer Fahrzeugtür bekannt, bei dem die auf einer Rolle als Dichtungsprofil vorliegende Dichtung von der Rolle abgezogen und mit einer an der Dichtung vorhandenen Klebefläche entlang einer für die Anbringung vorgesehenen Applikationslinie an der Fahrzeugtür umlaufend aufgerollt wird.

Unter dem Begriff "aufgerollt" wird im Zusammenhang mit diesem Stand der Technik und der vorliegenden Erfindung verstanden, dass das Dichtungsprofil beispielsweise mithilfe mindestens einer Applikationsrolle fortlaufend an einer Fläche einer Fahrzeugkarosserie oder einem Teil der Fahrzeugkarosserie, wie beispielsweise einer Fahrzeugtür der vorgegebenen Montage- beziehungsweise Applikationslinie folgend angedrückt und auf diese Art und Weise angebracht wird.

Um bei derartigen Verfahren die Fertigungssicherheit zu erhöhen schlägt die EP 1 733 839 B1 vor, dass das in einem kontinuierlichen Extrusionsprozess hergestellte Dichtungsprofil vor dem Aufwickeln auf eine Rolle, die für den Einsatz in einer Applikationseinrichtung bestimmt ist, geprüft wird. Werden bei der Prüfung vor dem Aufwickeln fehlerhafte Abschnitte, sogenannte Fehlstellen, des Dichtungsprofils erkannt, werden diese Fehlstellen markiert und/oder deren Anfangs- und Endkoordinaten gespeichert. Bei den Fehlstellen handelt es sich um zur Verarbeitung ungeeignete Abschnitte des Dichtungsprofils, beispielsweise mit Beschädigungen oder Unregelmäßigkeiten der Dichtungsprofiloberfläche. Die Prüfung des extrudierten Dichtungsprofils erfolgt bei dem Hersteller mittels einer Prüfeinheit. Eine der Prüfeinheit nachgeordnete Markierungseinheit, beispielsweise ein Tintenstrahldrucker, kennzeichnet die Fehlstellen durch Markierungen am Anfang und Ende der Fehlstelle. Ferner wird auf die Möglichkeit hingewiesen, eine unterbrochen oder ununterbrochen durchgehende Markierung entlang der Fehlstelle anzubringen.

Fehlstellen größerer Länge werden bei dem bekannten Verfahren schon vor dem Aufwickeln auf die Rolle herausgetrennt. Hierbei entstehende Profilenden werden durch ein Fügeverfahren wieder miteinander verbunden, vorzugsweise verklebt. Kürzere Fehlstellen werden in der Applikationseinrichtung anhand der vor dem Aufwickeln des Dichtungsprofils auf die Rolle erzeugten Markierung(en) und/oder der gespeicherten Anfangs- und Endkoordinaten der Fehlstelle(n) in der Applikationseinrichtung, d.h. anwenderseitig abgetrennt und als Abfall ausgesondert.

Ein wesentlicher Nachteil des bekannten Verfahrens besteht darin, dass die herstellerseitige Markierung der Fehlstellen und/oder das Datenhandling zum Speichern der Anfangs- und Endkoordinaten auf die entfernt von dem Hersteller des Dichtungsprofils stehende Applikationseinrichtung beim Anwender abgestimmt sein muss. Insoweit ist eine enge Abstimmung zwischen dem Hersteller des auf Rollen aufgewickelten Dichtungsprofils sowie dem Hersteller und Anwender der Applikationseinrichtung erforderlich, um das Abtrennen fehlerhafter Abschnitte anhand der herstellerseitig erzeugten Markierungen und/oder gespeicherten Anfangs- und Endkoordinaten anwenderseitig zuverlässig zu ermöglichen.

Ausgehend von diesem Stand der Technik liegt der Erfindung die Aufgabe zugrunde, ein Verfahren und eine Vorrichtung zum Anbringen von Dichtungsprofilen der eingangs erwähnten Art vorzuschlagen, das die vorerwähnten Nachteile nicht aufweist.

Diese Aufgabe wird durch ein Verfahren mit den Merkmalen des Anspruchs 1 sowie eine Vorrichtung mit den Merkmalen des Anspruchs 9 gelöst.

Die Lösung der Aufgabe basiert auf dem Gedanken, durch Anordnung eines automatischen optischen Inspektionssystems innerhalb der Applikationseinrichtung auf Anwenderseite unmittelbar Fehlstellen und Stoßstellen des Dichtungsprofils zu erkennen, d.h. insbesondere ohne das Markierungen an dem auf der Rolle aufgewickelten Dichtungsprofil erforderlich sind oder ein Datenhandling zwischen dem Dichtungsprofilhersteller und dem Anwender erforderlich wäre. Das optische Inspektionssystem erkennt mittels Bildverarbeitungsverfahren nicht nur Fehlstellen des Dichtungsprofils, sondern darüber hinaus die in der Automobilproduktion nicht tolerierten Stoßstellen, an denen die Profilenden durch ein Fügeverfahren miteinander verbunden werden. Derartige Stoßtellen können, wie bereits eingangs ausgeführt, herstellerseitig beim Heraustrennen von Fehlstellen größerer Länge als auch anwenderseitig beim Wechseln der Rolle des aufgewickelten Dichtprofils entstehen. Das Bildverarbeitungsverfahren des Inspektionssystems ist derart konfiguriert, dass es beim Durchlauf des Dichtungsprofils durch den Puffer etwa vorhandene Fehl- und Stoßstellen des Dichtungsprofils erkennt.

Insbesondere ist es bei dem erfindungsgemäßen Verfahren nicht erforderlich, dass der Hersteller des Dichtungsprofils dieses vor dem Aufwickeln auf die Rolle auf Fehlstellen und/oder Stoßstellen prüft. Infolgedessen entfällt auch die Notwendigkeit derartige Fehlstellen und/oder Stoßstellen des Dichtungsprofils zu Markieren oder ein entsprechendes Datenhandling vorzusehen. Neben Preisvorteilen in der Herstellung des Dichtungsprofils ist eine enge Abstimmung zwischen dem Hersteller des Dichtungsprofils sowie dem Hersteller und Anwender der Applikationseinrichtung nicht erforderlich.

Sofern das Inspektionssystem beim Durchlauf des Dichtungsprofils weder Fehlstellen noch Stoßstellen detektiert, wird der Transport des Dichtungsprofils in Richtung jeder Applikationsrolle unterbrochen, sobald das Ende des Dichtungsprofils eine Ausgangsposition zur Anbringung des Dichtungsprofils erreicht hat. Werden indes Fehlstellen oder Stoßstellen von dem Inspektionssystem erkannt, wird der die Fehlstellen aufweisende Abschnitt des Dichtungsprofils soweit in Richtung jeder Applikationsrolle vorgeschoben, dass dieser Abschnitt mit der ohnehin am Applikationskopf vorhandenen Trenneinrichtung abgeschnitten werden kann.

Um sicher zu stellen, dass entlang der gesamten vorgesehenen Applikationslinie des Dichtungsprofils ein fehlerfreier Abschnitt des Dichtungsprofils appliziert wird, wird der Transportweg des Dichtungsprofils zwischen dem Inspektionssystem und der Ausgangsposition zur Anbringung des Dichtungsprofils derart bestimmt, dass dessen Länge mindestens der Länge der für die Anbringung des Dichtungsprofils vorgesehenen Applikationslinie entspricht. Der Abschnitt des Dichtungsprofils zwischen dem Inspektionssystem und der Ausgangsposition ist zuvor von dem Inspektionssystem auf Fehlstellen und Stoßstellen untersucht worden. Wird in diesem Abschnitt von dem Inspektionssystem kein Fehler erkannt, wird dieser entlang der Applikationslinie angebracht.

Hat das Inspektionssystem indes während des Transportes des Dichtungsprofils bis zur Ausgangsposition zur Anbringung des Dichtungsprofils eine Fehlstelle oder Stoßstelle erkannt, so kann der Abschnitt mit der erkannten Fehlstelle oder Stoßstelle nicht verwendet werden. Der Abschnitt wird dann so weit vorgeschoben, dass der Abschnitt einschließlich der Fehl- oder Stoßstelle durch die Trenneinrichtung am Applikationskopf abgetrennt und ausgesondert werden kann.

Für die Anbringung des Dichtungsprofils ist eine Relativbewegung zwischen dem Applikationskopf und der Fahrzeugkarosserie oder deren Teil notwendig. Vorzugsweise kann diese Relativbewegung mithilfe eines Handhabungsroboters erzeugt werden, der das Fahrzeugkarosserieteil bewegt. Grundsätzlich ist es jedoch ebenfalls denkbar, die Fahrzeugkarosserie oder deren Teil während der Anbringung des Dichtungsprofils ortsfest zu fixieren und den Applikationskopf mithilfe eines Handhabungsroboters relativ zu dem Fahrzeugteil beziehungsweise der Karosserie zu bewegen.

Das Dichtungsprofil kann vorkonfektioniert mit einem Klebestreifen von dem Hersteller des Dichtungsprofils auf der Rolle angeliefert werden. Alternativ ist es in einer Ausgestaltung der Erfindung vorgesehen, dass das auf die Rolle aufgewickelte Dichtungsprofil über keinen Klebestreifen verfügt, sondern dieser in der Applikationseinrichtung kontinuierlich mit einer Konfektioniereinheit an dem Dichtungsprofil angebracht wird. Durch die in die Applikationseinrichtung integrierte Anbringung des Klebestreifens können die Nachteile vorkonfektionierter Dichtungsprofile vermieden werden. Beispielsweise besteht die Gefahr, dass sich der Liner vorzeitig von der Klebeschicht ablöst und das Dichtungsprofil dadurch nicht ordnungsgemäß verklebt werden kann. Darüber hinaus kann durch das Verkleben des Klebestreifens bei der Extrusion des Dichtungsprofils die Qualität der unterschiedlichen Chargen variieren. Die Integration der Konfektionierung des Dichtungsprofils in die Applikationseinrichtung ist aus der WO 2008/104269 A1 bekannt. Die Integration der Konfektionierung der Applikationseinrichtung bietet im Zusammenhang mit der vorliegenden Erfindung eine größtmögliche Unabhängigkeit des Anwenders von dem Hersteller des extrudierten Dichtungsprofils.

Nachfolgend wird die vorliegende Erfindung unter Bezugnahme auf die Figuren näher erläutert. Es zeigen
- **Figur 1:**: eine schematische Ansicht einer Applikationseinrichtung zur Durchführung des erfindungsgemäßen Verfahrens und
- **Figur 2:**: eine Darstellung eines Dichtungsprofils mit daran angeordnetem Klebestreifen.

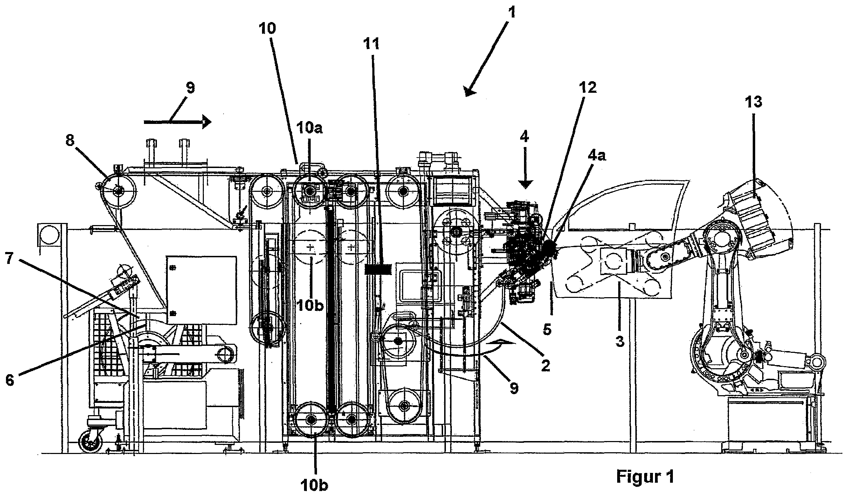

Figur 1 zeigt eine Applikationseinrichtung (1) zum Anbringen eines Dichtungsprofils (2) an einer Fahrzeugtür (3) mittels eines Applikationskopfes (4) umfassend eine Andruckrolle (4a). In dem Ausführungsbeispiel erfolgt die Anbringung des Dichtungsprofils (2) an einer Fläche (5) die aus der Ebene der Fahrzeugtür und somit aus der Zeichnungsebene in einem annähernd rechten Winkel nach oben weist. Die für die Anbringung des Dichtungsprofils (2) vorgesehene

Applikationslinie an dieser Fläche entspricht der Kontur der lediglich schematisch dargestellten Fahrzeugtür (3).

Im Einzelnen weist die Applikationseinrichtung (1) ein auf eine Rolle (6) aufgewickeltes Dichtungsprofil (2), eine Abspuleinheit (7) zur drehbaren Aufnahme der Rolle (6) und Mittel (8) zum Abziehen des Dichtungsprofils (2) aus der Abspuleinheit (7) auf. Bei den Mitteln zum Abziehen (8) handelt es sich insbesondere, wie in Figur 1 dargestellt, um eine angetriebene Umlenkrolle.

In Transportrichtung (9) des Dichtungsprofils (2) ist der Abspuleinheit (7) ein Puffer (10) nachgeordnet, der durch im Abstand zueinander veränderlicher Rollen (10a, 10b) Schwankungen zwischen der Zufluss- und Abflussgeschwindigkeit des Dichtungsprofils (2) ausgleichen kann. Der Abstand wird mittels eines nicht dargestellten Verstellantriebes verändert, während das Dichtungsprofil (2) um die Umlenkungen (10a,b) läuft.

Die Applikationseinrichtung (1) umfasst ferner ein auf den Puffer (10) ausgerichtetes automatisches optisches Inspektionssystem (11), das zur Erkennung von Fehlstellen und Stoßstellen beim Durchlaufen des Dichtungsprofils (2) durch den Puffer (10) eingerichtet ist. Das Inspektionssystem (11) kann eine oder mehrere Kameras aufweisen, die auf die Oberfläche des Dichtungsprofils (2) gerichtet sind. Das zugrundeliegende Bildverarbeitungsverfahren des optischen Inspektionssystems ist derart konfiguriert, dass es sowohl Fehlstellen als auch Stoßstellen des durchlaufenden Dichtungsprofils (2) erkennt.

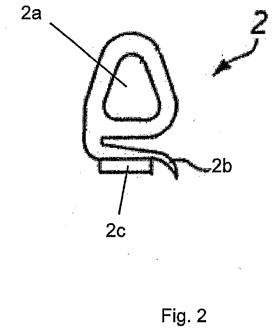

Das auf die Rolle (6) aufgewickelte Dichtungsprofil (2) ist im Querschnitt in Figur 2 dargestellt. Das Dichtungsprofil (2) besteht aus einem Hohlprofil (2a) mit einer daran angeordneten Lippe (2b) an der ein Klebestreifen (2c) angebracht ist.

Ferner verfügt die Applikationseinrichtung (1) über eine Trenneinrichtung (12), mit der das an der Fahrzeugtür (3) angebrachte Dichtungsprofil (2) am Ende des Applikationsvorgangs auf Stoß abgeschnitten wird. Die Trenneinrichtung besteht insbesondere aus einem Schneidmesser sowie gegebenenfalls einem um eine Rotationsachse drehbaren Gegenmesser. Zusätzlich kann ein Tauchbad mit einem Antihaftmittel vorgesehen sein. Die Berührungen des Gegenmessers mit der Klebeschicht beim Abschneiden des Dichtungsprofils (2) mit daran anhaftendem Klebstoff ist unproblematisch, da nach jedem Schneidvorgang das rotierende Gegenmesser weitergedreht wird und dadurch nacheinander die verschiedenen wirksamen Schneidkanten des Gegenmessers in das Antihaftmittel in dem Tauchbad eintauchen, sodass eine Verschmutzung des Schneid- und Gegenmessers durch Klebstoffrückstände vermieden wird.

Die anhand von Figur 1 beschriebene Applikationseinrichtung arbeitet wie folgt:
Ein eine Rolle (6) mit vom Hersteller ungeprüftem und nicht markiertem Dichtungsprofil (2) wird auf der Rolle (6) in der Abspuleinheit (7) angeliefert. Die Abspuleinheit (7) umfasst einen Transportbehälter, in der die Rolle (6) drehbar gelagert ist, sodass das Dichtungsprofil von der Rolle (6) mithilfe der angetriebenen Umlenkrolle abgezogen werden kann. Während des Durchlaufs des Dichtungsprofils (2) durch den Puffer (10) wird es von dem optischen Inspektionssystem (11) auf Fehlstellen und Stoßstellen untersucht. Erkennt eine nicht dargestellte Steuerung Fehlstellen oder Stoßstellen wird der Abschnitt des Dichtungsprofils (2) mit der erkannten Fehlstelle oder Stoßstelle soweit in Richtung der Applikationsrolle (4a) in dem Applikationskopf (4) vorgeschoben, das dieser Abschnitt mit der Trenneinrichtung (12) am Applikationskopf (4) abgeschnitten werden kann. Hierdurch ist sichergestellt, dass eine Applikation des Dichtungsprofils entlang der Applikationslinie stets nur dann stattfindet, wenn der gesamte Abschnitt zwischen dem Inspektionssystem und der Applikationsrolle fehlerfrei ist, d.h. das optische Inspektionssystem hat auf dieser Länge des Dichtungsprofils weder einen Fehler noch eine Stoßstelle erkannt. Sobald in diesem Abschnitt zwischen optischem Inspektionssystem (11) und Andruckrolle (4a) ein fehlerfreier Abschnitt des Dichtungsprofils vorliegt, wird dessen Transport unterbrochen, sobald das Ende des Dichtungsprofils eine Ausgangsposition zur Anbringung des Dichtungsprofils an der Fahrzeugtür (3) erreicht hat. Sodann erfolgt die Applikation des Dichtungsprofils entlang der für die Anbringung vorgesehenen Applikationslinie an der Fahrzeugtür (3), indem diese mittels des Roboters (13) relativ zu dem Applikationskopf der Applikationseinrichtung (1) bewegt wird. Die Bewegung des Roboterarms wird derart gesteuert, dass sich die Applikationsrolle exakt entlang der vorgesehenen Applikationslinie entlang der Fahrzeugtür (3) bewegt. Nach dem Anbringen des Dichtungsprofils an der Fahrzeugtüre (3) wird diese mittels der Trenneinrichtung (12) abgeschnitten.

Bis die nächste Tür (3) von dem Roboter (13) zur Applikation des Dichtungsprofils (2) bereitgestellt wird, wird das kontinuierlich von der Rolle (6) abgezogene Dichtungsprofil (2) in dem Puffer (10) zwischengespeichert.

**Bezugszeichenliste**

| **Nr.** | **Bezeichnung** |
|---|---|
| 1 | Applikationseinrichtung |
| 2 | Dichtungsprofil |
| 2a | Hohlprofil |
| 2b | Lippe |
| 2c | Klebestreifen |
| 3 | Fahrzeugtür |
| 4 | Applikationskopf |
| 4a | Applikationsrolle |
| 5 | Fläche |
| 6 | Rolle |
| 7 | Abspuleinheit |
| 8 | Mittel zum Abziehen |
| 9 | Transporteinrichtung |
| 10 | Puffer |
| 10a,b | Umlenkrollen |
| 11 | optisches Inspektionssystem |
| 12 | Trenneinrichtung |
| 13 | Roboter |

## Patentansprüche

1. Verfahren zum Anbringen von Dichtungsprofilen (2) mit einer Klebeschicht an Fahrzeugkarosserien oder deren Teilen mit einer Applikationseinrichtung (1), wobei
- ein auf eine Rolle (6) aufgewickeltes Dichtungsprofil (2) aus einer Abspuleinheit (7) der Applikationseinrichtung (1) abgezogen wird, wobei das Dichtungsprofil (2) vor dem Aufwickeln auf die Rolle (6) nicht auf Fehlstellen und/oder Stoßstellen geprüft wird und die Fehlstellen und/oder die Stoßstellen des Dichtungsprofils (2) vor dem Aufwickeln des Dichtungsprofils auf die Rolle (6) nicht markiert werden,
- das Dichtungsprofil (2) nach dem Abzug aus der Abspuleinheit (7) einen Puffer (10) der Applikationseinrichtung (1) durchläuft, der Schwankungen zwischen der Zufluss- und Abflussgeschwindigkeit des Dichtungsprofils ausgleicht,
- das Dichtungsprofil (2) beim Durchlaufen durch den Puffer (10) mit Hilfe eines optischen Inspektionssystems (11) auf Fehlstellen und Stoßstellen des Dichtungsprofils (2) untersucht wird,
- Abschnitte des Dichtungsprofils (2) mit von dem Inspektionssystem (11) erkannten Fehlstellen und/oder Stoßstellen von dem Dichtungsprofil (2) abgetrennt und ausgesondert werden, bevor das Dichtungsprofil (2) mit der Klebeschicht entlang einer für die Anbringung vorgesehenen Applikationslinie an der Fahrzeugkarosserie oder dem Teil der Fahrzeugkarosserie mittels mindestens einer Applikationsrolle (4a) eines Applikationskopfs (4) aufgerollt wird.

2. Verfahren nach Anspruch 1, **dadurch gekennzeichnet, dass** der an der Fahrzeugkarosserie oder deren Teil angebrachte Abschnitt des Dichtungsprofils (2) mit einer Trenneinrichtung (12) abgeschnitten wird, die an dem Applikationskopf (4) angeordnet ist.

3. Verfahren nach Anspruch 1 oder 2, **dadurch gekennzeichnet, dass** der Transport des Dichtungsprofils (2) in Richtung jeder Applikationsrolle (4a) unterbrochen wird, sobald das Ende des Dichtungsprofils (2) eine Ausgangsposition zur Anbringung des Dichtungsprofils erreicht hat.

4. Verfahren nach einem der Ansprüche 1 bis 3, **dadurch gekennzeichnet, dass** Abschnitte des Dichtungsprofils (2) mit erkannten Fehlstellen und/oder Stoßstellen so weit in Richtung jeder Applikationsrolle (4a) vorgeschoben werden, dass diese Abschnitte mit der Trenneinrichtung (12) am Applikationskopf (4) abgeschnitten werden können.

5. Verfahren nach einem der Ansprüche 1 bis 4, **dadurch gekennzeichnet, dass** der Transportweg des Dichtungsprofils (2) zwischen dem Inspektionssystem (11) und der Ausgangsposition zur Anbringung des Dichtungsprofils derart bestimmt wird, dass dessen Länge mindestens der Länge der für die Anbringung des Dichtungsprofils (2) vorgesehenen Applikationslinie entspricht.

6. Verfahren nach einem der Ansprüche 1 bis 5, **dadurch gekennzeichnet, dass** die Fahrzeugkarosserie oder deren Teil mit Hilfe eines Roboters (13) zur Anbringung des Dichtungsprofils relativ zu dem Applikationskopf (4) der Applikationseinrichtung bewegt wird.

7. Verfahren nach einem der Ansprüche 1 bis 6, **dadurch gekennzeichnet, dass** an dem Dichtungsprofil (2) in der Applikationseinrichtung (1) kontinuierlich ein die Klebeschicht aufweisender Klebestreifen (2c) angebracht wird.

8. Verfahren nach einem der Ansprüche 1 bis 6, **dadurch gekennzeichnet, dass** ein einen Klebestreifen (2c) aufweisendes Dichtungsprofil (2) auf die Rolle (6) aufgewickelt ist.

9. Applikationseinrichtung zur Durchführung des Verfahrens nach einem der Ansprüche 1 bis 8 umfassend
- ein auf eine Rolle (6) aufgewickeltes Dichtungsprofil (2), wobei das aufgewickelte Dichtungsprofil (2) nicht auf Fehlstellen und/oder Stoßstellen geprüft ist und die Fehlstellen und/oder die Stoßstellen des auf die Rolle (6) aufgewickelten Dichtungsprofils (2) nicht markiert sind,
- eine Abspuleinheit (7) eingerichtet zum drehbaren Aufnahme der Rolle (6),
- Mittel zum Abziehen (8) des Dichtungsprofils (2) aus der Abspuleinheit (7),
- einen der Abspuleinheit (7) in Transportrichtung (9) des Dichtungsprofils (2) nachgeordneten Puffer (10) eingerichtet um Schwankungen zwischen der Zufluss- und Abflussgeschwindigkeit des Dichtungsprofils (2) auszugleichen,
- ein auf den Puffer (10) ausgerichtetes optisches Inspektionssystem (11) eingerichet um das Dichtungsprofil (2) beim Durchlaufen durch den Puffer (10) auf Fehlstellen und Stoßstellen zu untersuchen,
- eine Trenneinrichtung (12) eingerichet zum Abtrennen von Abschnitten des Dichtungsprofils (2) mit von dem Inspektionssystem erkannten Fehlstellen und Stoßstellen von dem Dichtungsprofil (2),
- einen Applikationskopf (4) zum Aufrollen des Dichtungsprofils (2) auf der Fahrzeugkarosserie oder dem Teil der Fahrzeugkarosserie mittels mindestens einer Applikationsrolle (4a).

10. Applikationseinrichtung nach Anspruch 9, **dadurch gekennzeichnet, dass** die Trenneinrichtung (12) an dem Applikationskopf (4) angeordnet ist.

11. Applikationseinrichtung nach Anspruch 9 oder 10, **dadurch gekennzeichnet, dass** an dem Applikationskopf (4) ein Endschalter angeordnet ist, der den Transport des Dichtungsprofils in Richtung jeder Applikationsrolle (4a) unterbricht, sobald das Ende des Dichtungsprofils (2) eine Ausgangsposition zur Anbringung des Dichtungsprofils (2) erreicht hat.

12. Applikationseinrichtung nach Anspruch 10 oder 11, **dadurch gekennzeichnet, dass** das optische Inspektionssystem (11) mit einer Steuerung verbunden ist, die derart konfiguriert ist, dass Abschnitte des Dichtungsprofils mit erkannten Fehlstellen und/oder Stoßstellen so weit in Richtung jeder Applikationsrolle (4a) vorgeschoben werden, dass diese mit der Trenneinrichtung (12) am Applikationskopf (4) abgeschnitten werden können.

13. Applikationseinrichtung nach einem der Ansprüche 9 bis 12, **dadurch gekennzeichnet, dass** der Transportweg des Dichtungsprofils (2) zwischen dem Inspektionssystem (11) und jeder Applikationsrolle (4a) derart bestimmt wird, dass dessen Länge mindestens der Länge der für die Anbringung des Dichtungsprofils vorgesehenen Applikationslinie entspricht.

14. Applikationseinrichtung nach einem der Ansprüche 9 bis 13, **dadurch gekennzeichnet, dass** die Applikationseinrichtung (1) über einen Handhabungsroboter (13) verfügt, der zur Erzeugung einer Relativbewegung zwischen der Fahrzeugkarosserie oder deren Teil und dem Applikationskopf (4) eingerichet ist.

15. Applikationseinrichtung nach einem der Ansprüche 9 bis 14, **dadurch gekennzeichnet, dass** die Applikationseinrichtung (1) eine Konfektioniereinheit zum Anbringen eines Klebestreifens an dem Dichtungsprofil aufweist.

16. Applikationseinrichtung nach einem der Ansprüche 9 bis 14, **dadurch gekennzeichnet, dass** ein einen Klebestreifen (2c) aufweisendes Dichtungsprofil (2) auf die Rolle (6) aufgewickelt ist.

## Claims

1. A method for applying sealing profiles (2) by way of an adhesive layer to vehicle bodies or parts thereof using an application device (1), wherein
- a sealing profile (2) wound onto a roll (6) is drawn from an unwinding unit (7) of the application device (1), wherein the sealing profile (2) is not checked for defects and/or discontinuities before winding onto the roll (6) and the defects and/or the discontinuities of the sealing profile (2) are not marked before winding the sealing profile onto the roll (6),
- after drawing from the unwinding unit (7), the sealing profile (2) passes through a buffer (10) of the application device (1), which buffer compensates for fluctuations between an inflow speed and an outflow speed of the sealing profile;
- the sealing profile (2) is inspected for defects and discontinuities of the sealing profile (2) using an optical inspection system (11) as the sealing profile passes through the buffer (10),
- portions of the sealing profile (2) with defects and/or discontinuities of the sealing profile (2) detected by the inspection system (11) are cut off and separated from the sealing profile (2) before the sealing profile (2) with the adhesive layer is rolled on the vehicle body or the part of the vehicle body, along an application line provided for application purposes, by means of at least one application roller (4a) of an application head (4).

2. The method according to claim 1, **characterized in that** the portion of the sealing profile (2) applied to the vehicle body or part thereof is cut off by a separating device (12) which is arranged on the application head (4).

3. The method according to claim 1 or 2, **characterized in that** the transport of the sealing profile (2) in the direction of each application roller (4a) is interrupted as soon as the end of the sealing profile (2) has reached a starting position for applying the sealing profile.

4. The method according to one of claims 1 to 3, **characterized in that** portions of the sealing profile (2) with detected defects and/or discontinuities are advanced so far in the direction of each application roller (4a) that these portions can be cut off by the separating device (12) on the application head (4).

5. The method according to one of claims 1 to 4, **characterized in that** the transport path of the sealing profile (2) between the inspection system (11) and the starting position for applying the sealing profile is determined in such a manner that its length at least corresponds to the length of the application line provided for applying the sealing profile (2).

6. The method according to one of claims 1 to 5, **characterized in that**
the vehicle body or part thereof is moved relative to the application head (4) of the application device with the aid of a robot (13) for applying the sealing profile.

7. The method according to one of claims 1 to 6, **characterized in that** an adhesive strip (2c) an adhesive layer is applied continuously to the sealing profile (2) in the application device (1).

8. The method according to one of claims 1 to 6, **characterized in that** a sealing profile (2) having an adhesive strip (2c) is wound onto the roller (6).

9. An application device for implementing the method according to one of claims 1 to 8, comprising:
- a sealing profile (2) wound onto a roll (6), wherein the wound sealing profile (2) is not checked for defects and/or discontinuities and the defects and/or the discontinuities of the sealing profile (2) wound on the roll (6) are not marked,
- an unwinding unit (7) configured to accommodate the roll (6) in a rotatable manner;
- means for drawing off (8) the sealing profile (2) from the unwinding unit (7),
- a buffer (10) arranged downstream of the unwinding unit (7) in the transport direction (9) of the sealing profile (2), in order to compensate for fluctuations between the inflow and outflow speed of the sealing profile (2),
- an optical inspection system (11) aligned on the buffer (10) and adapted to inspect the sealing profile (2) for defects and discontinuities as the sealing profile passes through the buffer (10),
- a separating device (12) adapted to cut off portions of the sealing profile (2) having defects and discontinuities detected by the inspection system from the sealing profile (2),
- an application head (4) for rolling the sealing profile (2) on the vehicle body or the part of the vehicle body by means of at least one application roller (4a).

10. The application device according to claim 9, **characterized in that** the separating device (12) is arranged on the application head (4).

11. The application device according to claim 9 or 10, **characterized in that** a limit switch is arranged on the application head (4) which interrupts the transport of the sealing profile in the direction of each application roller (4a) as soon as the end of the sealing profile (2) has reached a starting position for applying the sealing profile (2).

12. The application device according to claim 10 or 11, **characterized in that** the optical inspection system (11) is connected to a controller, which is configured in such a manner that portions of the sealing profile with detected defects and/or discontinuities are advanced so far in the direction of each application roller (4a) that these portions can be cut off by the separating device (12) on the application head (4).

13. The application device according to one of claims 9 to 12, **characterized in that** the transport path of the sealing profile (2) between the inspection system (11) and each application roller (4a) is determined in such a manner that its length corresponds at least to the length of the application line provided for applying the sealing profile.

14. The application device according to one of claims 9 to 13, **characterized in that** the application device (1) has a handling robot (13) which is adapted to produce a relative movement between the vehicle body or part thereof and the application head (4).

15. The application device according to one of claims 9 to 14, **characterized in that** the application device (1) comprises an assembly unit for applying an adhesive strip to the sealing profile.

16. The application device according to one of claims 9 to 14, **characterized in that** a sealing profile (2) having an adhesive strip (2c) is wound onto the roll (6).

## Revendications

1. Procédé, destiné à apposer des profilés d'étanchéité (2) à l'aide d'une couche adhésive sur des carrosseries de véhicules ou leurs pièces à l'aide d'un système applicateur (1),
- un profilé d'étanchéité (2) enroulé sur un rouleau (6) étant retiré d'une unité de débobinage (7) du système applicateur (1), avant d'avoir été enroulé sur le rouleau (6), le profilé d'étanchéité (2) n'étant pas vérifié au niveau de zones d'imperfections et/ou de zones d'aboutements et les zones d'imperfections et/ou les zones d'aboutements du profilé d'étanchéité (2) n'étant pas marquées avant l'enroulement du profilé d'étanchéité sur le rouleau (6),
- après le retrait de l'unité de débobinage (7), le profilé d'étanchéité (2) traversant un tampon (10) du système applicateur (1), qui compense des fluctuations entre la vitesse d'afflux et la vitesse de débit du profilé d'étanchéité,
- lors de la traversée du tampon (10), le profilé d'étanchéité (2) étant vérifié à l'aide d'un système d'inspection optique (11) au niveau de zones d'imperfections et de zones d'aboutements du profilé d'étanchéité (2),
- des segments du profilé d'étanchéité (2) portant les zones d'imperfections et/ou les zones d'aboutements identifiées par le système d'inspection (11) étant sectionnés du profilé d'étanchéité (2) et éliminés, avant que le profilé d'étanchéité (2) pourvu de la couche adhésive soit enroulé le long d'une ligne d'application prévue pour l'apposition sur la carrosserie du véhicule ou la pièce de carrosserie du véhicule, au moyen d'au moins un rouleau applicateur (4a) d'une tête d'application (4) .

2. Procédé selon la revendication 1, **caractérisé en ce que** le segment du profilé d'étanchéité (2) apposé sur la carrosserie de véhicule ou sur la pièce de celle-ci est coupé dans un système de sectionnement (12) qui est placé sur la tête d'application (4).

3. Procédé selon la revendication 1 ou 2, **caractérisé en ce que** le transport du profilé d'étanchéité (2) dans la direction de chaque rouleau applicateur (4a) est interrompu dès que l'extrémité du profilé d'étanchéité (2) a atteint une position initiale pour l'apposition du profilé d'étanchéité.

4. Procédé selon l'une quelconque des revendications 1 à 3, **caractérisé en ce que** des segments du profilé d'étanchéité (2) portant des zones d'imperfections et/ou des zones d'aboutements identifiées sont poussés vers l'avant dans la direction de chaque rouleau applicateur (4a), de telle sorte que lesdits segments puissent être coupés par le système de sectionnement (12) sur la tête d'application (4).

5. Procédé selon l'une quelconque des revendications 1 à 4, **caractérisé en ce que** le trajet de transport du profilé d'étanchéité (2) entre le système d'inspection (11) et la position initiale pour l'apposition du profilé d'étanchéité est déterminé de telle sorte que sa longueur corresponde au moins à la longueur de la ligne d'application prévue pour l'apposition du profilé d'étanchéité (2).

6. Procédé selon l'une quelconque des revendications 1 à 5, **caractérisé en ce que** pour l'application du profilé d'étanchéité, la carrosserie du véhicule ou sa pièce est déplacé(e) à l'aide d'un robot (13) par rapport à la tête d'application (4) du système applicateur.

7. Procédé selon l'une quelconque des revendications 1 à 6, **caractérisé en ce que** sur le profilé d'étanchéité (2), dans le système applicateur (1) est apposé en continu un ruban adhésif (2c) comportant la couche adhésive.

8. Procédé selon l'une quelconque des revendications 1 à 6, **caractérisé en ce qu'**un profilé d'étanchéité (2) comportant un ruban adhésif (2c) est enroulé sur le rouleau (6).

9. Système applicateur, destiné à réaliser le procédé selon l'une quelconque des revendications 1 à 8, comprenant :
- un profilé d'étanchéité (2) enroulé sur un rouleau (6), le profilé d'étanchéité (2) enroulé n'étant pas vérifié au niveau de zones d'imperfections et/ou de zones d'aboutements et les zones d'imperfections et/ou les zones d'aboutements du profilé d'étanchéité (2) n'étant pas marquées avant l'enroulement du profilé d'étanchéité sur le rouleau (6),
- une unité de débobinage (7), aménagée pour recevoir en rotation le rouleau (6),
- des moyens, destinés à retirer (8) le profilé d'étanchéité (2) hors de l'unité de débobinage (7),
- un tampon (10), placé en aval de l'unité de débobinage (7) dans la direction de transport (9) du profilé d'étanchéité (2), aménagé pour compenser des fluctuations entre la vitesse d'afflux et la vitesse de débit du profilé d'étanchéité (2),
- un système d'inspection optique (11), dirigé vers le tampon (10), aménagé pour vérifier le profilé d'étanchéité (2) au niveau de zones d'imperfections et de zones d'aboutements, lors de la traversée du tampon (10),
- un système de sectionnement (12), aménagé pour sectionner du profilé d'étanchéité (2) des segments du profilé d'étanchéité (2) portant des zones d'imperfections et des zones d'aboutements identifiées par le système d'inspection,
- une tête d'application (4), destinée à enrouler le profilé d'étanchéité (2) sur la carrosserie de véhicule ou sur la pièce de carrosserie de véhicule au moyen d'au moins un rouleau applicateur (4a).

10. Système applicateur selon la revendication 9, **caractérisé en ce que** le système de sectionnement (12) est placé sur la tête d'application (4).

11. Système applicateur selon la revendication 9 ou 10, **caractérisé en ce que** sur la tête d'application (4) est placé un interrupteur de fin de course qui interrompt le transport du profilé d'étanchéité dans la direction de chaque rouleau applicateur (4a) dès que l'extrémité du profilé d'étanchéité (2) a atteint une position initiale pour l'apposition du profilé d'étanchéité (2).

12. Système applicateur selon la revendication 10 ou 11, **caractérisé en ce que** le système d'inspection optique (11) est connecté avec un système de commande, qui est configuré de telle sorte que des segments du profilé d'étanchéité portant des zones d'imperfections et/ou des zones d'aboutements identifiées soient poussés en avant dans la direction de chaque rouleau applicateur (4a) assez loin pour que ceux-ci puissent être coupés à l'aide du système de sectionnement (12) sur la tête d'application (4).

13. Système applicateur selon l'une quelconque des revendications 9 à 12, **caractérisé en ce que** le trajet de transport du profilé d'étanchéité (2) entre le système d'inspection (11) et chaque rouleau d'application (4a) est déterminé de telle sorte que sa longueur corresponde au moins à la longueur de la ligne d'application prévue pour l'apposition du profilé d'étanchéité.

14. Système applicateur selon l'une quelconque des revendications 9 à 13, **caractérisé en ce que** le système applicateur (1) dispose d'un robot de manipulation (13), qui est aménagé pour générer un déplacement relatif entre la carrosserie de véhicule ou la pièce de celle-ci et la tête d'application (4).

15. Système applicateur selon l'une quelconque des revendications 9 à 14, **caractérisé en ce que** le système applicateur (1) comporte une unité de confection, destinée à apposer un ruban adhésif sur le profilé d'étanchéité.

16. Système applicateur selon l'une quelconque des revendications 9 à 14, **caractérisé en ce qu'**un profilé d'étanchéité (2) comportant un ruban adhésif (2c) est enroulé sur le rouleau (6).
